# EUROPÄISCHE PATENTSCHRIFT

(11) **EP 2 044 164 B1**
(45) Veröffentlichungstag und Bekanntmachung des Hinweises auf die Patenterteilung: **06.09.2017**
(21) Anmeldenummer: 07786996.4
(22) Anmeldetag: 03.07.2007
(51) Int. Cl.: C09J 175/06, C08G 18/08, C08K 5/5435

(54) **POLYURETHAN-KLEBSTOFF MIT SILANVERBINDUNG ALS ADDITIV**
POLYURETHANE ADHESIVE WITH A SILANE COMPOUND AS AN ADDITIVE
COLLES EN POLYURÉTHANNE AVEC UN COMPOSÉ SILANE COMME ADDITIF

(30) Priorität: 12.07.2006 EP 06117069
(43) Veröffentlichungstag der Anmeldung: 08.04.2009
(73) Patentinhaber: BASF SE, 67056 Ludwigshafen am Rhein (DE)
(72) Erfinder: SCHUMACHER, Karl-Heinz, 67433 Neustadt (DE); HARTZ, Oliver, 67117 Limburgerhof (DE); BURGHARDT, Andre, 55758 Dickesbach (DE)
(74) Vertreter: BASF IP Association
(86) Internationale Anmeldenummer: PCT/EP2007/056666
(87) Internationale Veröffentlichungsnummer: WO 2008/006733

(56) Entgegenhaltungen:
- EP-A- 0 383 015
- EP-A- 0 443 537
- EP-A- 1 544 226
- EP-A1- 0 721 001
- WO-A-01/77248
- DE-A1- 4 215 648
- JP-A- 2005 272 592
- US-A- 3 763 274
- US-A1- 2002 002 232

## Beschreibung

Die Erfindung betrifft die Verwendung eines wässrigen Kaschierklebstoffs, der ein Polyurethan und ein bestimmtes Silan der Formel 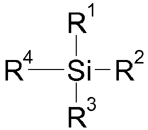 worin R¹ bis R⁴ unabhängig voneinander für einen organischen Rest stehen, mit der Maßgabe, dass mindestens zwei der Gruppen R¹ bis R⁴ für eine Hydroxy oder Alkoxygruppe stehen, enthält, zur Verbesserung der Wärmestandfestigkeit von mittels Polyurethandispersionen erfolgten Verklebungen von Polymerfolien, wobei mindestens eine der übrigen Gruppen R¹ bis R⁴ für einen organischen Rest steht, der mindestens eine Epoxygruppe, enthält und wobei Polymerfolien miteinander oder mit sonstigen Formteilen, z. B. Formteilen aus Holz oder Kunststoff verklebt werden, und wobei das Polyurethan in Wasser dispergiert ist, es sich also um eine wässrige Polyurethandispersion handelt.

Wässrige Polyurethandispersionen werden als Klebstoffe, insbesondere auch als Kaschierklebstoffe, z. B. in der Automobil- oder Möbelindustrie verwendet.

Für derartige technische Kaschierungen ist insbesondere eine hohe Wärmestandfestigkeit von Bedeutung, die Verklebung soll auch bei hohen Temperaturen über eine möglichst lange Zeit ihre Festigkeit behalten.

Für technische Kaschierungen werden z. B. Polyurethane mit Carbodiimidgruppen oder Polyurethandispersionen, welche Carbodiimide als Additiv enthalten, verwendet, wie in WO 2005/05565 beschrieben ist.

Polyurethane, die an das Polyurethangerüst gebundene Alkoxysilangruppen enthalten, sind z. B. in der EP-A 163 214 oder EP-A 315 006 beschrieben; DE-A 42 15 648 betrifft die Verwendung von derartigen Polyurethanen mit Alkoxysilangruppen als Kontaktklebstoff.

Wässrige Klebstoffe, welche Silane als Additive enthalten, sind aus EP-A 1 479 744 bekannt. Der Klebstoff enthält jedoch kein Polyurethan sondern ein Polyacrylat als Bindemittel.

Aufgabe der Erfindung war, die anwendungstechnischen Eigenschaften von Polyurethandispersionen für die technische Kaschierung weiter zu verbessern; insbesondere soll die Wärmestandfestigkeit möglichst gut sein. Die Klebstoffe sollen lagerstabil und möglichst einfach herstellbar sein.

Dem gemäß wurde die Verwendung des oben definierten wässrigen Klebstoffs gefunden.

### Zum Polyurethan

Der wässrige Klebstoff enthält ein Polyurethan als Bindemittel.

In Betracht kommt vorzugsweise ein Polyurethan, das überwiegend aus Polyisocyanaten, insbesondere Diisocyanaten, und, als Reaktionspartner, Polyesterdiolen, Polyetherdiolen oder deren Gemische aufgebaut ist.

Vorzugsweise ist das Polyurethan zu mindestens 40 Gew.-%, besonders bevorzugt zu mindestens 60 Gew.-% und ganz besonders bevorzugt zu mindestens 80 Gew.-% aus Diisocyanaten, Polyetherdiolen und/oder Polyesterdiolen aufgebaut.

Bevorzugt enthält das Polyurethan Polyesterdiole in einer Menge von mehr als 10 Gew.-%, besonders bevorzugt größer 30 Gew. %, insbesondere größer 40 Gew. % oder größer 50 Gew. %, ganz besonders bevorzugt größer 60 Gew. %, bezogen auf das Polyurethan.

Insbesondere werden Polyesterdiole als Aufbaukomponenten verwendet, falls Polyesterdiole im Gemisch mit Polyetherdiolen verwendet werden, handelt es sich vorzugsweise bei mindestens 50 mol %, besonders bevorzugt bei mindestens 80 mol %, ganz besonders bevorzugt bei 100 mol % des Gemischs von Polyester- und Polyetherdiolen um Polyesterdiole.

Vorzugsweise hat das Polyurethan einen Schmelzpunkt größer 30 °C, insbesondere größer 40 °C, besonders bevorzugt größer 50 °C oder auch größer 60 oder größer 70 °C; im allgemeinen ist der Schmelzpunkt nicht größer als 150 °C, insbesondere nicht größer als 100 °C. Der Schmelzpunkt liegt daher insbesondere in einem Bereich von 30 bis 150 °C, besonders bevorzugt von 40 bis 150, und ganz besonders bevorzugt von 30 bis 100 °C und insbesondere von 50 bis 80 °C.

Das Polyurethan hat vorzugsweise eine Schmelzenthalpie von mehr als 20 J/g.

Die Messung des Schmelzpunktes und der Schmelzenthalpie erfolgt dabei nach der Methode der Differential Scanning Calorimetry.

Die Messung erfolgt an Polyurethanfilmen einer Dicke von 200 µm, die vor der Messung in einem Umluft-Trockenschrank bei 40 °C 72 Stunden getrocknet wurden. Zur Vorbereitung der Messung werden ca. 13 mg des Polyurethans in Pfännchen gefüllt. Die Pfännchen werden verschlossen, die Proben auf 120 °C aufgeheizt, mit 20 K/min abgekühlt und 20 Stunden bei 20 °C getempert. Die so vorbereiteten Proben werden nach der DSC-Methode nach DIN 53765 vermessen, wobei die Probe mit 20 K/min aufgeheizt wird. Als Schmelztemperatur wird die Peaktemperatur gemäß DIN 53765 ausgewertet, die Schmelzenthalpie wird wie in Bild 4 der DIN 53765 ermittelt.

Insgesamt ist das Polyurethan vorzugsweise aufgebaut aus:
a) Diisocyanaten,
b) Diolen, von denen
   b1) 10 bis 100 mol-%, bezogen auf die Gesamtmenge der Diole (b), ein Molekulargewicht von 500 bis 5000 g/mol aufweisen,
   b2) 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Insbesondere zu nennen sind als Monomere (a) Diisocyanate X(NCO)2, wobei X für einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendüsocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Derartige Diisocyanate sind im Handel erhältlich.

Als Gemische dieser Isocyanate sind besonders die Mischungen der jeweiligen Strukturisomeren von Diisocyanatotoluol und Düsocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Zum Aufbau der Polyurethane kann man als Verbindungen außer den vorgenannten auch Isocyanate einsetzen, die neben den freien Isocyanatgruppen weitere verkappte Isocyanatgruppen, z. B. Uretdiongruppen tragen.

Im Hinblick auf gute Filmbildung und Elastizität kommen als Diole (b) vornehmlich höhermolekulare Diole (b1) in Betracht, die ein Molekulargewicht von etwa 500 bis 5000, vorzugsweise von etwa 1000 bis 3000 g/mol haben. Es handelt sich hierbei um das zahlenmittlere Molgewicht Mn. Mn ergibt sich durch Bestimmung der Anzahl der Endgruppen (OH-Zahl).

Bei den Diolen (b1) kann es sich um Polyesterpolyole handeln, die z. B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z. B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH2)y-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als mehrwertige Alkohole kommen z. B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH2)x-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Ferner kommen gegebenenfalls auch Polycarbonat-Diole, wie sie z. B. durch Umsetzung von Phosgen mit einem Überschuss von den als Aufbaukomponenten für die Polyesterpolyole genannten niedermolekularen Alkohole erhalten werden können, in Betracht.

Gegebenenfalls können auch Polyesterdiole auf Lacton-Basis mitverwendet werden, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)z-COOH ableiten, wobei z eine Zahl von 1 bis 20 ist und ein H-Atom einer Methyleneinheit auch durch einen C₁- bis C₄-Alkylrest substituiert sein kann. Beispiele sind e-Caprolacton, ß-Propiolacton, g-Butyrolacton und/oder Methyl-e-caprolacton sowie deren Gemische. Geeignete Starterkomponenten sind z. B. die vorstehend als Aufbaukomponente für die Polyesterpolyole genannten niedermolekularen zweiwertigen Alkohole. Die entsprechenden Polymerisate des e-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Polyetherdiole sind insbesondere durch Polymerisation von Ethylenoxid, Propylenoxid, Butylenoxid, Tetrahydrofuran, Styroloxid oder Epichlorhydrin mit sich selbst, z. B. in Gegenwart von BF3 oder durch Anlagerung dieser Verbindungen gegebenenfalls im Gemisch oder nacheinander, an Startkomponenten mit reaktionsfähigen Wasserstoffatomen, wie Alkohole oder Amine, z. B. Wasser, Ethylenglykol, Propan-1,2-diol, Propan-1,3-diol, 2,2-Bis(4-hydroxyphenyl)-propan oder Anilin erhältlich. Besonders bevorzugt sind Polypropylenoxid, Polytetrahydrofuran eines Molekulargewichts von 240 bis 5000, und vor allem 500 bis 4500.

Unter b1) fallen nur Polyetherdiole, die zu weniger als 20 Gew.-% aus Ethylenoxid bestehen. Polyetherdiole mit mindestens 20 Gew.-% sind hydrophile Polyetherdiole, welche zu Monomeren c) zählen.

Gegebenenfalls können auch Polyhydroxyolefine mitverwendet werden, bevorzugt solche mit 2 endständigen Hydroxylgruppen, z. B. α,ω-Dihydroxypolybutadien, α,-ω-Dihydroxypolymethacrylester oder α,-ω-Dihydroxypolyacrylester als Monomere (c1). Solche Verbindungen sind beispielsweise aus der EP-A 622 378 bekannt. Weitere geeignete Polyole sind Polyacetale, Polysiloxane und Alkydharze.

Bevorzugt handelt es sich bei mindestens 30 mol % , besonders bevorzugt bei mindestens 70 mol % der Diole b1) um Polyesterdiole. Besonders bevorzugt werden als Diole b1) ausschließlich Polyesterdiole verwendet.

Die Härte und der Elastizitätsmodul der Polyurethane lassen sich erhöhen, wenn als Diole (b) neben den Diolen (b1) noch niedermolekulare Diole (b2) mit einem Molekulargewicht von etwa 60 bis 500, vorzugsweise von 62 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentan-1,5-diol und Neopentylglykol bevorzugt werden.

Als Diole b2) kommen z. B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)x-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Bevorzugt beträgt der Anteil der Diole (b1), bezogen auf die Gesamtmenge der Diole (b) 10 bis 100 mol-% und der Anteil der Monomere (b2), bezogen auf die Gesamtmenge der Diole (b) 0 bis 90 mol-%. Besonders bevorzugt beträgt das Verhältnis der Diole (b1) zu den Monomeren (b2) 0,1 : 1 bis 5:1, besonders bevorzugt 0,2 : 1 bis 2 : 1.

Um die Wasserdispergierbarkeit der Polyurethane zu erreichen, enthalten die Polyurethane vorzugsweise von den Komponenten (a), (b) und (d) verschiedene Monomere (c), die wenigstens eine Isocyanatgruppe oder wenigstens eine gegenüber Isocyanatgruppen reaktive Gruppe und darüber hinaus wenigstens eine hydrophile Gruppe oder eine Gruppe, die sich in eine hydrophile Gruppe überführen lässt, tragen, als Aufbaukomponente. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen. Der Anteil der Komponenten mit (potentiell) hydrophilen Gruppen an der Gesamtmenge der Komponenten (a), (b), (c), (d) und (e) wird im allgemeinen so bemessen, dass die Molmenge der (potentiell) hydrophilen Gruppen, bezogen auf die Gewichtsmenge aller Monomere (a) bis (e), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (e).

Bevorzugte Monomere mit nichtionischen hydrophilen Gruppen sind Polyethylenoxiddiole mit mindestens 20 Gew.-% Ethylenoxid, Polyethylenoxidmonoole sowie die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US-A 3,905,929 und US-A 3,920,598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z. B. Carbonsäuregruppen oder tertiäre Aminogruppen.

(Potentiell) ionische Monomere (c) sind z. B. in Ullmanns Encyklopädie der technischen Chemie, 4. Auflage, Band 19, S.311-313 und beispielsweise in der DE-A 1 495 745 ausführlich beschrieben.

Als (potentiell) kationische Monomere (c) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen, wie sie z. B. durch Alkoxylierung von zwei an Aminstickstoff gebundene Wasserstoffatome aufweisende Amine, z. B. Methylamin, Anilin oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁-bis C₆-Alkylhalogeniden oder Benzylhalogeniden, z. B. Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3,412,054 beschrieben sind. Insbesondere sind Verbindungen der allgemeinen Formel (c1) 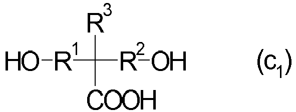 in welcher R¹ und R² für eine C₁- bis C₄-Alkandiyl-(Einheit) und R³ für eine C₁- bis C₄-Alkyl-(Einheit) steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 39 11 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Als Monomere (c) mit gegenüber Isocyanaten reaktiven Aminogruppen kommen Aminocarbonsäuren wie Lysin, β-Alanin oder die in der DE-A 20 34 479 genannten Addukte von aliphatischen diprimären Diaminen an a,ß-ungesättigte Carbon- oder Sulfonsäuren in Betracht.

Solche Verbindungen gehorchen beispielsweise der Formel (c2)

H2N-R4-NH-R5-X (c2)

in der
R⁴ und R⁵ unabhängig voneinander für eine C₁- bis C₆-Alkandiyl-Einheit, bevorzugt Ethylen
und X für COOH oder SO₃H stehen.

Besonders bevorzugte Verbindungen der Formel (c2) sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist.

Weiterhin besonders bevorzugt sind die Addukte der oben genannten aliphatischen diprimären Diamine an 2-Acrylamido-2-methylpropansulfonsäure, wie sie z. B. in der DE-B 1 954 090 beschrieben sind.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Neutralisierungsmittel sind z. B. Ammoniak, NaOH, Triethanolamin (TEA) Triisopropylamin (TIPA) oder Morpholin, bze dessen Derivate. Besonders bevorzugt liegen die Sulfonat- oder Carboxylatgruppen in Form ihrer Salze mit einem Alkaliion oder einem Ammoniumion als Gegenion vor.

Das Polyurethan enthält vorzugsweise anionische Gruppen, insbesondere Sulfonatgruppen und besonders bevorzugt Carboxylatgruppen.

Die Monomere (d), die von den Monomeren (a) bis (c) verschieden sind und welche gegebenenfalls auch Bestandteile des Polyurethans sind, dienen im allgemeinen der Vernetzung oder der Kettenverlängerung. Es sind im allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen.
Alkohole mit einer höheren Wertigkeit als 2, die zur Einstellung eines gewissen Verzweigungs- oder Vernetzungsgrades dienen können, sind z. B. Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z. B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, dass man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z. B. in Form der entsprechenden Ketimine (siehe z. B. CA-A 1 129 128), Ketazine (vgl. z. B. die US-A 4,269,748) oder Aminsalze (s. US-A 4,292,226) eingesetzt werden. Auch Oxazolidine, wie sie beispielsweise in der US-A 4,192,937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden.

Bevorzugt werden Gemische von Di- und Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-%, bezogen auf die Gesamtmenge der Komponenten (b) und (d) eines Polyamins mit mindestens 2 gegenüber Isocyanaten reaktiven Aminogruppen als Monomere (d).

Für den gleichen Zweck können auch als Monomere (d) höher als zweiwertige Isocyanate eingesetzt werden. Handelsübliche Verbindungen sind beispielsweise das Isocyanurat oder das Biuret des Hexamethylendiisocyanats.

Monomere (e), die gegebenenfalls mitverwendet werden, sind Monoisocyanate, Monoalkohole und monoprimäre und -sekundäre Amine. Im allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-a,a-dimethylbenzylisocyanat (TMI) und Ester von Acryl- oder Methacrylsäure wie Hydroxyethylacrylat oder Hydroxyethylmethacrylat.

Auf dem Gebiet der Polyurethanchemie ist allgemein bekannt, wie das Molekulargewicht der Polyurethane durch Wahl der Anteile der miteinander reaktiven Monomere sowie des arithmetischen Mittels der Zahl der reaktiven funktionellen Gruppen pro Molekül eingestellt werden kann.

Normalerweise werden die Komponenten (a) bis (e) sowie ihre jeweiligen Molmengen so gewählt, dass das Verhältnis A : B mit
A der Molmenge an Isocyanatgruppen und
B der Summe aus der Molmenge der Hydroxylgruppen und der Molmenge der funktionellen Gruppen, die mit Isocyanaten in einer Additionsreaktion reagieren können.

0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (e) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (a) bis (e) zur Herstellung des Polyurethans erfolgt vorzugsweise bei Reaktionstemperaturen von bis zu 180 °C, bevorzugt bis zu 150 °C unter Normaldruck oder unter autogenem Druck.
Die Herstellung von Polyurethanen, bzw. von wässrigen Polyurethandispersionen ist dem Fachmann bekannt.

Die Polyurethane liegen vorzugsweise als wässrige Dispersion vor und werden in dieser Form verwendet.

### Zum Silan

Das Silan hat die Formel 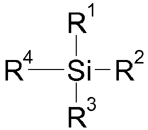 worin R¹ bis R⁴ unabhängig voneinander für einen organischen Rest stehen, mit der Maßgabe, dass mindestens zwei der Gruppen R¹ bis R⁴ für eine Hydroxy- oder Alkoxygruppe stehen, wobei mindestens eine der übrigen Gruppen R¹ bis R⁴ für einen organischen Rest steht, der mindestens eine Epoxygruppe, enthält.

Vorzugsweise stehen zwei oder drei, besonders bevorzugt drei der Grupppen R¹ bis R⁴ für eine Hydroxygruppe oder eine Alkoxygruppe. Im allgemeinen handelt es sich um Alkoxygruppen, bei der späteren Verwendung hydrolisieren die Alkoxygruppen dann zu Hydroxygruppen, die dann weiter reagieren, bzw. vernetzen.

Insbesondere handelt es sich um eine C₁ bis C₉ -, vorzugsweise um eine C₁ bis C₆ -, besonders bevorzugt um eine C₁ bis C₃ Alkoxygruppe, ganz besonders bevorzugt handelt es sich um eine Methoxy- oder Ethoxygruppe, insbesondere um eine Methoxygruppe.

Die übrigen Gruppen R¹ bis R⁴ stehen für einen beliebigen organischen Rest, dessen Molgewicht im allgemeinen kleiner 500 g/mol, insbesondere kleiner 200 g/mol, besonders bevorzugt kleiner 150 bzw. kleiner 100 g/mol ist.

Bei den übrigen Gruppen R¹ bis R⁴ kann es sich z. B. um aliphatische oder aromatische Kohlenwasserstoffgruppen oder Kohlenwasserstoffgruppen mit sowohl aliphatischen, auch cycloaliphatischen, als auch aromatischen Bestandteilen handeln. Mindestens eine der Gruppen R¹ bis R⁴ steht für einen organischen Rest, der mindestens eine Epoxygruppe, enthält.

Besonders bevorzugt ist die Glycidylgruppe.

Die übrigen Gruppen R¹ bis R⁴ können auch mehrere funktionelle Gruppen enthalten, z. B. zwei primäre Aminogruppen, zwei sekundäre Aminogruppen oder eine primäre und eine sekundäre Aminogruppe.

Bei bevorzugten Silane stehen drei der Reste R¹ bis R⁴ für eine Hydroxy- oder Alkoxygruppe (vorzugsweise Alkoxygruppe, siehe oben) und der eine übrige Rest für einen organischen Rest mit mindestens einer Epoxygruppe. Ebenfalls bevorzugt sind Silane, bei denen zwei der Reste R¹ bis R⁴ für eine Hydroxy- oder Alkoxygruppe (vorzugsweise Alkoxygruppe, siehe oben) und die beiden übrigen Reste jeweils für einen organischen Rest mit mindestens einer Epoxygruppe stehen.

Geeignete Silane sind insbesondere niedermolekular und haben ein Molgewicht unter 5000, insbesondere unter 2000, besonders bevorzugt unter 1000 und ganz besonders bevorzugt unter 500 g/mol; das Molgewicht liegt im allgemeinen oberhalb 50 insbesondere oberhalb 100, bzw. 150 g/mol.

Als Silane in Betracht kommen beispielsweise
3-Glycidoxypropyltrimethoxysilan
3-Glycidoxypropyltriethoxysilan

Der Gehalt der Silane in dem wässrigen Klebstoff beträgt im allgemeinen mehr als 1, insbesondere mehr als 2, besonders bevorzugt mehr als 5 Gew. Teile auf 100 Gew. Teile Polyurethan, der Gehalt der Silane beträgt im allgemeinen maximal 30 Gew.teile, insbesondere maximal 20 Gew.Teile, besonders bevorzugt maximal 15 Gew. Teile auf 100 Gew.-Teile Polyurethan.

Zu weiteren Bestandteilen des wässrigen Klebstoffs
Der erfindungsgemäße Klebstoff ist ein wässriger Klebstoff.

Ein Hauptbestandteil des Klebstoffs ist das Polyurethan als Bindemittel. Der Klebstoff besteht vorzugsweise zu mindestens 20 Gew. %, besonders bevorzugt zu mindestens 30 Gew. %, ganz besonders bevorzugt zu mindestens 40 Gew. % und insbesondere zu mindestens 50 Gew. %, bzw. zu mindestens 70 Gew. % aus dem Polyurethan, bezogen auf den Feststoffgehalt, d. h. ohne Wasser oder sonstige bei 21 °C, 1 bar flüssige Lösemittel).

Der Klebstoff kann allein aus dem Polyurethan und dem Silan bestehen, abgesehen von Wasser oder sonstigen Lösemitteln, die bei der Trocknung entweichen; er kann aber auch weitere Zusatzstoffe enthalten, z. B. weitere Bindemittel, Füllstoffe, Verdicker, Benetzungshilfsmittel, Entschäumer, Vernetzer. Weitere Zusatzstoffe können in einfacher Weise zum Polyurethan, bzw. zur wässrigen Dispersion des Polyurethan gegeben werden.

Als weitere Bindemittel, die im Gemisch mit dem Polyurethan verwendet werden können, kommen insbesondere radikalisch polymerisierte Polymere, vorzugsweise in Form ihrer wässrigen Dispersionen in Betracht.

Derartige Polymere bestehen vorzugsweise zu mindestens 60 Gew.- % aus sogenannten Hauptmonomeren, ausgewählt aus C₁ bis C₂₀ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren. Als Polymere insbesondere zu erwähnen sind solche, die zu mehr als 60 Gew.-% aus C₁-C₂₀ Alkyl(meth)acrylaten aufgebaut sind (kurz Polyacrylate) oder solche, die zu mehr als 60 Gew. %, z. B. auch zu 100 Gew. % aus Vinylestern, insbesondere Vinylacetat, und Ethylen bestehen (Vinylacetat/Ethylen Copolymer). Wässerige Dispersionen aus Copolymeren bestehend aus 15-25 Gew. % Ethylen und 75-85 Gew. % Vinylacetat sind als Abmischkomponente besonders bevorzugt.

In einer besonderen Ausführungsform enthält der Klebstoff neben dem Polyurethan kein weiteres Bindemittel.

Bei den weiteren Bestandteilen des Klebstoffs kann es sich z. B. auch um weitere Vernetzer handeln.

In Betracht kommen z. B. chemisch blockierte Isocyanate, verkapselte Isocyanate, verkapselte Uretdione, Biurete oder Allophanate oder Verbindungen mit Carbodiimidgruppen.

Der zusätzliche Vernetzer kann an das Polyurethan gebunden sein, es kann sich aber auch um eine Verbindung handeln, die im Polyurethan gelöst oder verteilt ist.

Der Klebstoff benötigt zur Erreichung der gewünschten Eigenschaften keine weiteren Vernetzer, vorzugsweise enthält der Klebstoff daher auch keine weiteren Vernetzer.

Der Feststoffgehalt (alle Bestandteile außer Wasser oder sonstige bei 21 °C, 1 bar flüssige Lösemittel) liegt vorzugsweise zwischen 20 und 80 Gew.-%.

### Zur Verwendung

Der erfindungsgemäße Klebstoff kann als einkomponentiger (1K) oder zweikomponentiger (2K) Klebstoff verwendet werden. Bei einem 2K Klebstoff wird vor der Verwendung noch ein weitere Zuatzstoff, im allgemeinen ein Vernetzer, z. B. eine Isocyanat- oder Azirdinverbindung oder im vorliegenden Fall das Silan zugesetzt. Ein 1K Klebstoff enthält bereits den Vernetzer, bzw benötigt keine weiteren Zusatzstoffe oder Vernetzer.

Der erfindungsgemäße Klebstoff als 1K oder 2 K Klebstoff.

Besonders geeignet ist der erfindungsgemäße Klebstoff als Kaschierklebstoff, d. h. zur dauerhaften Verklebung von Polymerfolien. Die Polymerfolien werden miteinander oder mit sonstigen Formteilen, z. B. Formteile aus Holz oder Kunststoff, verklebt.

Besonders bevorzugt als Polymerfolien sind z. B. Folien aus Polyester, wie Polyethylenterephthalat, Polyolefinen wie Polyethylen, Polypropylen oder Polyvinylchlorid, aus Polyacetat, insbesondere auch geschäumte PVC-Folien und geschäumte thermoplastische Polyolefinfolien (TPO).

Bei den Formteilen kann es sich auch um Formteile handeln, welche aus synthetischen oder natürlichen Fasern oder Spänen aufgebaut sind, die durch ein Bindemittel zu einem Formteil gebunden sind; insbesondere sind auch Formteile aus Kunststoff, z. B. ABS, geeignet. Die Formteile können eine beliebige Form haben.

Die zu verklebenden Substrat oder Formteile können vorbehandelt sein, z. B. können sie mit Haftvermittlern beschichtet sein.

Die Beschichtung der Substrate oder Formteile mit dem Klebstoff kann nach üblichen Auftragsverfahren erfolgen. Nach der Beschichtung erfolgt eine Trocknung, vorzugsweise bei Raumtemperatur oder Temperaturen bis zu 80 °C, um Wasser oder sonstige Lösemittel zu entfernen.

Die aufgebrachte Klebstoffmenge beträgt vorzugsweise 0,5 bis 100 g/m2, besonders bevorzugt 2 bis 80 g/m2, ganz besonders bevorzugt 10 bis 70 g/m2. Vorzugsweise wird entweder nur ein zu verklebendes Substrat (Folie) oder nur das Formteil einseitig beschichtet; es kommt jedoch auch eine Beschichtung beider zu verklebender Substrate (beidseitige Beschichtung), bzw. von Substrat und Formteil kommt in Betracht.

Bei Verwendung von 1K-Klebstoffen kann das mit Klebstoff beschichtete Substrat oder Formteil gelagert werden; flexible Substrate können z. B. auf Rollen aufgewickelt werden.

Bei Verwendung eines 2K-Klebstoffs kann entsprechend verfahren werden, bevorzugt wird jedoch das Formteil beschichtet und nicht die Folie; nach einer kurzen Lagerzeit (wenige Stunden) sollte die Folie aufkaschiert werden.

Zur Verklebung werden die zu verklebenden Teile zusammengefügt. Der Klebstoff wird dann thermisch aktiviert. Die Temperatur in der Klebstoffschicht beträgt vorzugsweise 20 bis 200 °C, besonders bevorzugt 30 bis 180 °C.

Die Verklebung erfolgt vorzugsweise unter Druck, dazu können z. B. die zu verklebenden Teile mit einem Druck von 0,005 bis 5 N/mm2 zusammengepresst werden.

Die erhaltenen Verbunde zeichnen sich durch hohe mechanische Festigkeit auch bei erhöhten Temperaturen (Wärmestandfestigkeit) oder unter sich stark ändernden Klimabedingungen (Klimabeständigkeit) aus.

Besondere Bedeutung hat das erfindungsgemäße Verfahren in der Auto-, Möbel oder Schuhinsustrie, z. B. bei der Verklebung von flexiblen Substraten auf Autoinnenteilen, wie Amaturenbretter, Türinnenverkleidungen und Hutablagen oder zur Herstellung von folienbeschichteten Möbeln, z. B. Küchenfronten, oder Verklebung von Schuhteilen miteinander.

### Beispiele

### Einsatzstoffe:

### Silane:

3-Glycidoxypropyltrimethoxysilan, erhältlich als Geniosil^{®} GF 80 von der Firma Wacker-Chemie GmbH.
3-Glycidoxypropyltriethoxysilan, erhältlich als Geniosil^{®} GF 82 von der Firma Wacker-Chemie GmbH.

### Andere Vernetzer (zum Vergleich):

Basonat^{®} F 200 WD , ein selbst emulgierendes Isocyanat welches von der BASF AG für die Vernetzung von wässerigen Dispersionen vermarktet wird.

### Polyurethandispersion:

Luphen^{®} D 200 A, eine wässrige Dispersion eines Polyesterpolyurethans, welche von BASF für die technische Kaschierungen vermarktete wird.

### Herstellung der Klebstoffe

12,5 Gew.Teile des Vernetzers (fest, ohne Wasser, Lösemittel) auf 100 Gew. Polyurethan (fest, ohne Wasser) wurden in die Polyurethandispersion Luphen D 200 A eingerührt.

### Prüfung Technische Kaschierung Möbel:

38-40 g /m² (fest) des Klebstoffes wurden auf ein Faserformteil mit dreidimensionaler Oberfläche, wie es zur Herstellung von Möbelformteilen verwendet wird, aufgesprüht und getrocknet. In einer handelsüblichen Vakuum-Tiefzieh-Presse (Bürkle Thermoformer) wurde eine PVC-Folie (Roxan Typ 5371744 Buche Taunus) zukaschiert. Die Kaschierung erfolgte bei einer Heizplatten-Temperatur von 121 °C, und einem Druck von 4,5 bar; der Druck wurde während 45 Sekunden aufrecht erhalten. Die Vakuuumzeit betrug etwa 6 s.

Das erhaltene Formteil ist bis zum Rand mit der Folie kaschiert.

Die Kaschierung aus Formteil und Folie wurde zunächst 7 Tage bei Raumtemperatur gelagert. Danach erfolgte eine Lagerung bei 75 °C bis 90 °C, wobei die LagerungsTemperatur jede Stunde um 5 °C erhöht wurde, beginnend bei 75°C.
Nach jeder Stunde wurde an den Rändern des Formteils ausgemessen, ob und wieweit die kaschierte Folie geschrumpft ist, d. h. wie viel mm sich der Folienrand vom Rand des Formteils in Richtung Mitte des Prüfkörpers bewegt hat. Je geringer dieser Wert ist, um so besser ist die Wärmestandfestigkeit.

**Tabelle: Schrumpfung der Folie in Millimeter**

| Vernetzer | 75°C | 80°C | 85°C | 90°C |
|---|---|---|---|---|
| ohne | 1 | 2 | 2 | 3 |
| Basonat F 200 WD | 0,3 | 0,4 | 0,6 | 0,7 |
| Silan 1 | 0,4 | 0,5 | 0,6 | 0,7 |
| Silan 2 | 0,5 | 0,7 | 0,8 | 0,8 |

Die Tabelle zeigt, dass die mit den Silanen erreichten Ergebnisse zu denen mit Isocyanat-Vernetzern vergleichbar sind.

## Patentansprüche

1. Verwendung eines wässrigen Kaschierklebstoffs, enthaltend ein Polyurethan und ein Silan der Formel 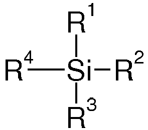 worin R¹ bis R⁴ unabhängig voneinander für einen organischen Rest stehen, mit der Maßgabe, dass mindestens zwei der Gruppen R¹ bis R⁴ für eine Hydroxy oder Alkoxygruppe stehen zur Verbesserung der Wärmestandfestigkeit von mittels Polyurethandispersionen erfolgten Verklebungen von Polymerfolien, wobei mindestens eine der übrigen Gruppen R¹ bis R⁴ für einen organischen Rest steht, der mindestens eine Epoxygruppe, enthält und wobei Polymerfolien miteinander oder mit sonstigen Formteilen, z. B. Formteilen aus Holz oder Kunststoff verklebt werden, und wobei das Polyurethan in Wasser dispergiert ist, es sich also um eine wässrige Polyurethandispersion handelt.

2. Verwendung gemäß Anspruch 1, **dadurch gekennzeichnet, dass** zwei oder drei der Gruppen R¹ bis R⁴ für eine Alkoxygruppe stehen.

3. Verwendung gemäß einem der Ansprüche 1 bis 2, **dadurch gekennzeichnet, dass** die Zusammensetzung 1 bis 30 Gew.-Teile des Silans auf 100 Gew.-Teile Polyurethan enthält.

4. Verwendung gemäß einem der Ansprüche 1 bis 3, **dadurch gekennzeichnet, dass** das Polyurethan zu mindestens 60 Gew.-% aus Diisocyanaten , Polyetherdiolen und/oder Polyesterdiolen aufgebaut ist.

5. Verwendung gemäß einem der Ansprüche 1 bis 4, **dadurch gekennzeichnet, dass** das Polyurethan anionische Gruppen, insbesondere Sulfonatgruppen oder Carboxylatgruppen enthält.

6. Verwendung gemäß einem der Ansprüche 1 bis 5, **dadurch gekennzeichnet, dass** das Polyurethan einen Schmelzpunkt im Bereich von -50 bis 150 °C, vorzugsweise von 0 bis 100 °C hat.

7. Verwendung gemäß einem der Ansprüche 1 bis 6, **dadurch gekennzeichnet, dass** der Klebstoff zu mindestens 40 Gew.-% aus dem Polyurethan besteht, bezogen auf den Feststoffgehalt (d. h. ohne Wasser und Lösemittel).

8. Verwendung gemäß einem der Ansprüche 1 bis 7, **dadurch gekennzeichnet, dass** es sich bei dem Klebstoff um einen ein-komponentigen (1 K)-Klebstoff handelt.

## Claims

1. The use of an aqueous laminating adhesive comprising a polyurethane and a silane of the formula 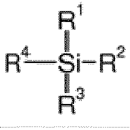 where R¹ to R⁴ each independently are an organic radical, with the proviso that at least two of the groups R¹ to R⁴ are a hydroxyl or alkoxy group, for improving the heat stability of polymer film bonds made using polyurethane dispersions, where at least one of the remaining groups R¹ to R⁴ is an organic radical which comprises at least one epoxy group, and where polymer films are bonded to one another or to other moldings, e.g., moldings of wood or plastic, and where the polyurethane is in a dispersion in water and thus constitutes an aqueous polyurethane dispersion.

2. The use according to claim 1, wherein two or three of the groups R¹ to R⁴ are an alkoxy group.

3. The use according to either of claims 1 and 2, wherein the composition comprises 1 to 30 parts by weight of the silane per 100 parts by weight of polyurethane.

4. The use according to any one of claims 1 to 3, wherein the polyurethane is synthesized from at least 60% by weight of diisocyanates, polyetherdiols and/or polyesterdiols.

5. The use according to any one of claims 1 to 4, wherein the polyurethane comprises anionic groups, especially sulfonate groups or carboxylate groups.

6. The use according to any one of claims 1 to 5, wherein the polyurethane has a melting point in the range from -50 to 150°C, preferably from 0 to 100°C.

7. The use according to any one of claims 1 to 6, wherein the adhesive is composed of at least 40% by weight of the polyurethane, based on the solids content (i.e., without water and solvent).

8. The use according to any one of claims 1 to 7, wherein the adhesive is a one-component (1 K) adhesive.

## Revendications

1. Utilisation d'un adhésif de stratification aqueux, contenant un polyuréthane et un silane de formule 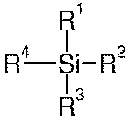 dans laquelle R¹ à R⁴ représentent indépendamment les uns des autres un radical organique, à condition qu'au moins deux des groupes R¹ à R⁴ représentent un groupe hydroxy ou alcoxy, pour améliorer la résistance à la chaleur de collages de films polymères réalisés au moyen de dispersions de polyuréthane, au moins un des autres groupes R¹ à R⁴ représentant un radical organique qui contient au moins un groupe époxy, et des films polymères étant collés les uns avec les autres ou avec d'autres pièces moulées, p. ex. des pièces moulées en bois ou en plastique, et le polyuréthane étant dispersé dans l'eau, et la dispersion consistant donc en une dispersion aqueuse de polyuréthane.

2. Utilisation selon la revendication 1, **caractérisée en ce que** deux ou trois des groupes R¹ à R⁴ représentent un groupe alcoxy.

3. Utilisation selon l'une quelconque des revendications 1 à 2, **caractérisée en ce que** la composition contient 1 à 30 parties en poids de silane pour 100 parties en poids de polyuréthane.

4. Utilisation selon l'une quelconque des revendications 1 à 3, **caractérisée en ce que** le polyuréthane est formé par au moins 60 % en poids de diisocyanates, de polyéther-diols et/ou de polyesterdiols.

5. Utilisation selon l'une quelconque des revendications 1 à 4, **caractérisée en ce que** le polyuréthane contient des groupes anioniques, notamment des groupes sulfonate ou des groupes carboxylate.

6. Utilisation selon l'une quelconque des revendications 1 à 5, **caractérisée en ce que** le polyuréthane a un point de fusion dans la plage allant de -50 à 150 °C, de préférence de 0 à 100 °C.

7. Utilisation selon l'une quelconque des revendications 1 à 6, **caractérisée en ce que** l'adhésif est constitué par 40 % en poids du polyuréthane, par rapport à la teneur en solides (c.-à-d. sans eau et solvant).

8. Utilisation selon l'une quelconque des revendications 1 à 7, **caractérisée en ce que** l'adhésif est un adhésif monocomposant (1K).
